# EUROPEAN PATENT APPLICATION

(11) **EP 3 718 813 A1**
(43) Date of publication of application: **07.10.2020**
(21) Application number: 19167361.5
(22) Date of filing: 04.04.2019
(51) Int. Cl.: B60L 53/12, B60L 53/14, B60L 53/36, B60L 53/65, G06Q 10/02, B60L 53/10, E04H 6/08

(54) **METHOD OF ALLOCATING PARKING SPACES FOR ELECTRIC VEHICLE CHARGING**

(71) Applicant: ABB Schweiz AG, 5400 Baden (CH)
(72) Inventor: VELOTTO, Giovanni, 723 56 Västerås (SE); VAN-DER-HORST, Arjen, 2623 GT Delft (NL)
(74) Representative: Kransell & Wennborg KB

(57) **Abstract**

A method of optimising parking space allocation in a parking lot provided with a plurality of parking spaces and a plurality of electric vehicle chargers associated with a respective parking space, the electric vehicle chargers being connected to an electric grid, wherein the method comprises: obtaining (Si) a parking start time request and a parking end time request of an electric vehicle to be parked in the parking lot, the time between the parking start time request and the parking end time request being a parking time of the electric vehicle, forecasting (S2) the use and availability of the parking spaces during the parking time, forecasting (S₃) the use of power and energy in the electric grid during the parking time, and allocating a parking space of the plurality of parking spaces to the electric vehicle by performing an optimisation (S₄) based on the parking start time request, the parking end time request, the forecasted use and availability of the parking spaces, and on the forecasted use of power and energy in the electric grid.

## Description

### TECHNICAL FIELD

The present disclosure generally relates to parking space allocation in large-scale parking lots.

### BACKGROUND

There is a high expected penetration of electric vehicle chargers in the electric distribution network. There are several challenges mainly regarding deployment and development of charging infrastructures and electric vehicle supply equipment.

In implementing new functionalities for electric vehicle chargers a problem that needs to be addressed is how to operate large scale parking lots that provide charging services to their customers in an efficient manner. A large scale parking lot typically has hundreds or thousands of parking spaces, and may for example be located nearby an airport, a train station, an industrial district, an intermodal transportation hub, a logistic centre, a stadium etc.

The publication "Research and Implementation of Electric Vehicle Fast Charging Station Parking Guidance System based on Mobile Terminal" by J. Liu, 9th International Conference on Intelligent Human-Machine Systems and Cybernetics, 2017, discloses the object to carry out fast charging station intelligent parking guidance system of EVs, which can realise services such as dynamic allocation of parking charge, identification of the car by QR code and mobile payment. This document furthermore discloses vehicle guidance, whereby a vehicle guidance function can guide the vehicle's charging path to reduce the time for the EV to find the parking.

US20140089016 A discloses a method for managing EV parking spaces. A request for parking reservation is received, wherein the number of available spaces is determined. Furthermore, charging capacity in a time window is determined, and it is determined when charging is to begin, and based on this data it is determined whether a request to charge is available.

### SUMMARY

None of the currently existing technology takes into account the grid infrastructure.

In view of the above, an object of the present disclosure is to provide a method of allocating parking spaces which solves, or at least mitigates, the problems of the prior art.

There is hence according to a first aspect of the present disclosure provided a method of optimising parking space allocation in a parking lot provided with a plurality of parking spaces and a plurality of electric vehicle chargers associated with a respective parking space, the electric vehicle chargers being connected to an electric grid, wherein the method comprises: obtaining a parking start time request and a parking end time request of an electric vehicle to be parked in the parking lot, the time between the parking start time request and the parking end time request being a parking time of the electric vehicle, forecasting the use and availability of the parking spaces during the parking time, forecasting the use of power and energy in the electric grid during the parking time, and allocating a parking space of the plurality of parking spaces to the electric vehicle by performing an optimisation based on the parking start time request, the parking end time request, the forecasted use and availability of the parking spaces, and on the forecasted use of power and energy in the electric grid.

The risk of congesting the electric grid while allocating the optimal parking space is thereby reduced.

One embodiment comprises obtaining electric charging information, wherein the optimisation is further based on the electric charging information.

According to one embodiment the electric charging information includes a requested final state of charging of the electric vehicle. The optimisation may hence allocate the parking space further based on the specific charging needs of the electric vehicle.

One embodiment comprises obtaining electric vehicle characteristics, wherein the optimisation is further based on the electric vehicle characteristics.

According to one embodiment the electric vehicle characteristics includes at least one of: electric vehicle size, battery type and battery specific charging instructions. Hereto, the optimisation may further take into account e.g. the electric vehicle size to find an optimal parking space for the electric vehicle in question, and/or the battery type to allocate a parking space with a certain charging capability of the associated electric charger. The charging instructions may furthermore be used for charging the battery in an optimal way for example as prescribed by the battery manufacturer or the electric vehicle manufacturer while taking e.g. the use and availability of the charging infrastructure and electric grid into account.

One embodiment comprises sending a location of the allocated parking space to a remote device.

According to one embodiment the remote device is a handheld device or a communications device of the electric vehicle. The driver of the electric vehicle may thereby be guided to the parking space, for example via an app in the handheld device such as a tablet computer or a smartphone, or by means of augmented reality head-up display (ARHUD) provided e.g. by the electric vehicle. Alternatively, the electric vehicle may be an autonomous electric vehicle and the electric vehicle ay be configured to find the parking space by means of the received location.

One embodiment comprises obtaining a driver profile of the driver of the electric vehicle, wherein the optimisation is further based on the driver profile.

According to one embodiment the driver profile includes statistical data about previous parking request fulfilments, which provides a measure of a probability that an optimisation target during the parking time will be achieved, wherein the optimisation involves allocating power infrastructure to the electric vehicle charger associated with the allocated parking space based on the statistical data.

Resource allocation of power/energy sources may thereby be improved, taking into account the risk that the optimisation target may not be achieved.

According to one embodiment the allocating of power infrastructure involves selecting power provision only from the electric grid in case the probability that the optimisation target will be achieved is below a threshold level or from the electric grid and from a local renewable energy source otherwise. The allocation of power/energy sources may thereby be selected by taking into account the risk that the optimisation target may not be fulfilled.

According to one embodiment the forecasting of the use and availability of the parking spaces takes into account at least one of: maintenance of parking spaces and/or electric vehicle chargers, and expected output of the electric vehicle chargers in a predetermined time frame.

One embodiment comprises obtaining a preferred parking space request, wherein the optimisation is further based on the preferred parking space request.

According to one embodiment the preferred parking space request includes at least one of a request of an indoor or outdoor parking space, and accessibility requirements of a driver of the electric vehicle.

There is according to a second aspect of the present disclosure provided a computer program comprising computer code which when executed by processing circuitry of an optimisation system causes the optimisation system to perform the method according to the first aspect.

There is according to a third aspect of the present disclosure provided an optimisation system for parking space allocation in a parking lot provided with a plurality of parking spaces and a plurality of electric vehicle chargers, wherein the optimisation system comprises: processing circuitry, and a storage medium comprising computer code which when executed by the processing circuitry causes the optimisation system to perform the method according to the first aspect.

The optimisation system may comprise a communications unit configured to send the location of the allocated parking space to a remote device such as a handheld device or the electric vehicle.

Generally, all terms used in the claims are to be interpreted according to their ordinary meaning in the technical field, unless explicitly defined otherwise herein. All references to "a/an/the element, apparatus, component, means, etc." are to be interpreted openly as referring to at least one instance of the "element, apparatus, component, means, etc.", unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows an example of an optimisation system for parking space allocation;
Fig. 2 schematically shows a block diagram of various modules of the optimisation system; and
Fig. 3 shows a method of optimising parking space allocation.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

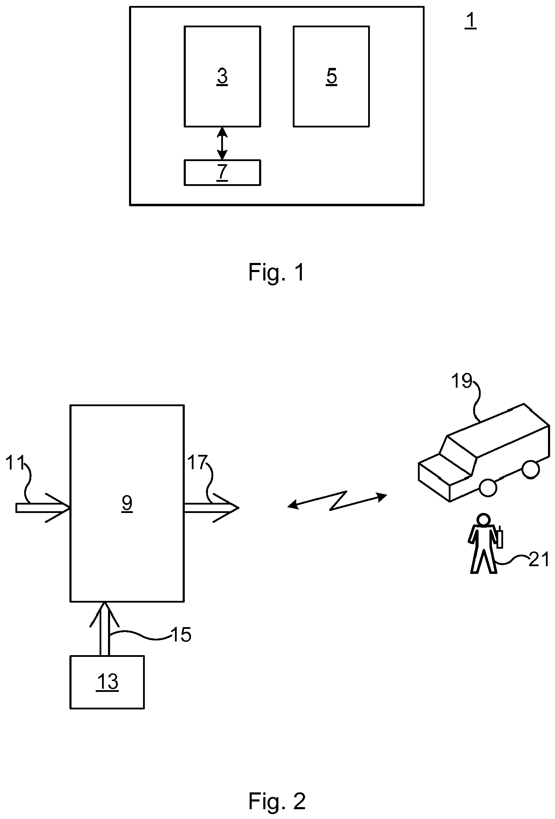

Fig. 1 schematically shows a block diagram of an optimisation system 1 for allocating parking spaces in a parking lot comprising a plurality of parking spaces.

The parking lot may be a large scale parking lot. A large scale parking lot may typically comprise hundreds or thousands of parking spaces. The parking lot may comprise a plurality of electric vehicle chargers. Each electric vehicle charger may be associated with a respective parking space. An electrical vehicle parking in a parking space equipped with an electric vehicle charger may thereby be connected to the electric vehicle charger for charging.

The electric vehicle chargers are connected to the electric grid, i.e. the distribution grid. According to one example the electric vehicle chargers may be connected to a microgrid which in turn is connected to the electric grid. The microgrid may form a local electrical infrastructure of the parking lot. The microgrid may be provided with one or more renewable energy sources, such as solar panels or wind turbines configured to power the electric vehicle chargers when required.

The optimisation system 1 comprises processing circuitry 3 and a storage medium 5. The storage medium 5 comprises computer code which when executed by the processing circuitry 3 causes the optimisation system 1 to perform the steps of any of the methods regarding parking space allocation disclosed herein.

The optimisation system 1 may furthermore comprise a communications unit 7 configured to send a location of an allocated parking space to a remote device, such as a tablet computer, a smart phone, and/or to a communications system of the electric vehicle for which the parking space has been allocated. The communications unit 7 may be configured to transmit the location of the allocated parking space by means of a wireless connection.

The storage medium 5 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

The processing circuitry 3 may use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning optimisation of parking space allocation.

Fig. 2 shows a block diagram of various functional modules of the optimisation system 1. The modules may be realised as hardware, software or a combination of hardware and software.

An optimisation module 9 is configured to receive a plurality of first input parameters 11 and second input parameters 15. The optimisation module 9 includes an objective function and is configured to allocate the optimal parking space in order to optimise for example the risk of congestion in the electric grid, operating costs and quality of service to the customers/drivers. The first input parameters 11 and the second input parameters 15 are typically constraints for the optimisation.

The first input parameters 11 may typically be provided by a driver of an electric vehicle which is to be parked in the parking lot, and/or from a third party.

The first input parameters 11 may for example include a parking start time request and a parking end time request. The parking start time request is the time when the driver desires to park the electric vehicle in the parking lot. The parking end time request is the time when the driver desires to leave with the electric vehicle from the parking lot. The time between the parking start time request and the parking end time request is the parking time of the electric vehicle, i.e. the time that the driver desires to park the electric vehicle in a parking space in the parking lot.

The first input parameters 11 may for example include electric charging information. The electric charging information may for example include a requested final state of charging of the electric vehicle. The driver may hence set the desired final state of charging of the electric vehicle, to be used in the optimisation for allocating a parking space. The final state of charging may for example be 50%, 75% or 90%, or any other number between 1 and 100, of the maximal charging state of the battery of the electric vehicle.

The first input parameters 11 may for example comprise electric vehicle characteristics. The electric vehicle characteristics may include one or more of the electric vehicle size, vehicle model, the battery type of the electric vehicle, and battery specific charging instructions.

The hitherto mentioned examples of first input parameters 11 are typically provided by the driver. In some examples it is envisaged that the first input parameters 11 could at least in part be provided by the electric vehicle, such as in the case of electric vehicle size, vehicle model, battery type and battery specific charging instructions.

The first input parameters 11 may for example comprise a driver profile of the driver of the electric vehicle. The driver profile may for example be obtained from a third party database. The driver profile may include statistical data about previous parking request fulfilments. The previous parking request fulfilments may for example indicate how often the driver has parked the entire parking time or how often and/or how early the driver has left the parking space before the parking end time request has expired. The statistical data provides a measure of the probability that the optimisation target will be achieved during the parking time.

The first input parameters 11 may for example comprise a preferred parking space request. The preferred parking space request may for example comprise special customer/driver constraints such as the preference of an indoor parking space or an outdoor parking space, or one or more special accessibility requests, for example wheelchair adapted parking.

The first input parameters 11 may according to one example include requests to participate in a vehicle to grid (V2G) programme.

One of the functional modules may be a forecasting module 13. The forecasting module 13 is configured to generate and provide the second input parameter(s) 15 to the optimisation module 9.

The second input parameters 15 may include forecasting data regarding the use and availability of the parking spaces and/or the electric vehicle chargers during the parking time. The use and availability of the parking spaces and/or the electric vehicle chargers may for example take into account one or more of know maintenance of electric vehicle chargers, maintenance of parking spaces, an expected amount of electric vehicles to be parked during the parking time, electricity pricing, any anomalies in one of the electric vehicle chargers obtained from one or more sensors, expected output of the electric vehicle chargers during the parking time, etc.

The second input parameters 15 may include forecasting data regarding the use of power and energy in the electric grid during the parking time. The forecasting module 13 may be configured to monitor and forecast power and energy production and use in the electric grid during the parking time.

The optimisation module 9 is configured to perform an optimisation using the objective function and based on the first input parameters 11 and the second input parameters 15 to find an optimal parking space in the parking lot for the electric vehicle and its driver.

The optimisation module 9 is configured to send the location of the parking lot to a remote device such as a tablet computer or a smart phone provided with an app for managing the parking space finding process, of for example the driver 21, or to the electric vehicle 19 which is to be parked in the parking lot. The electric vehicle 19 may in this case be provided with a communications system configured to communicate with the optimisation system 1.

The optimisation system 1 may for example be configured to interface with ARHUD-supported devices, for example provided in the electric vehicle or in a handheld device of the driver/customer.

The electric vehicle may according to one example be configured to send the location of the parking space to an electric vehicle which is provided with an autonomous vehicle navigation system in order to assist in reaching the parking space.

The optimisation system 1 may be configured to send the location of the parking space to a traffic control system of the parking area, which controls the traffic and interacts with the electric vehicles/drivers to make traffic smooth and with limited congestion.

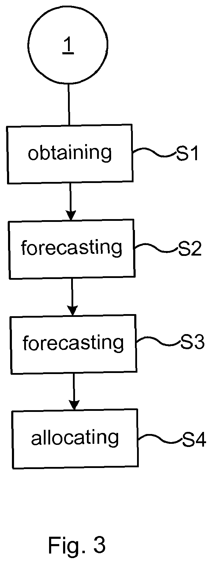

With reference to Fig. 3 a method of optimising parking space allocation performed by the optimisation system 1 will now be described.

In a step S1, first input parameters 11 are obtained by the optimisation system 1. The first input parameters 11 include at least a parking start time request and a parking end time request.

A customer/driver may thus input a parking start time and a parking end time in an app, for example using a tablet computer, a smart phone, or a user interface of the electric vehicle, which is then sent to the optimisation system 1. The optimisation system 1 hence receives the parking start time request and the parking end time request.

One or more further first input parameters 11, as previously exemplified may also be obtained in step S1 in various examples of the method.

In a step S2, the forecasting module 13 forecasts the use and availability of the parking spaces during the parking time.

In a step S3, the forecasting module 13 forecasts the use of power and energy in the electric grid during the parking time.

The second input parameters 15 are hence generated in steps S2 and S3. Steps S2 and S3 may be performed in parallel e.g. simultaneously, or in series. The second input parameters 15 may furthermore be sent to the optimisation module 9.

In a step S4, the optimisation module 9 performs an optimisation based on the parking start time request, the parking end time request, the forecasted use and availability of the parking spaces, and on the forecasted use of power and energy in the electric grid. In this manner a parking space of the plurality of parking spaces of the parking lot is allocated to the electric vehicle.

In general, the optimisation in step S4 is based on all the first input parameters 11 obtained by the optimisation module 9 in step S1.

In case the first input parameters 11 include the driver profile and the statistical data about previous parking request fulfilments, the optimisation in step S4 involves allocating power infrastructure to the electric vehicle charger associated with the allocated parking space based on the statistical data. The allocating of power infrastructure may in this case involve selecting power provision only from the electric grid in case the probability that the optimisation target will be achieved is below a threshold level or from the electric grid and from a local renewable energy source from the microgrid otherwise.

The location of the parking space is sent by the optimisation system 1 to a remote device such as a tablet computer or smart phone of the customer/driver 21 and/or to the electric vehicle 19. The driver 21 and/or the electric vehicle 19 is thereby able to navigate to the allocated parking space. The location of the parking space may for example be displayed using augmented reality, for example by projecting the route onto the windshield of the electric vehicle 19. The electric vehicle 19 and the driver 21 may thereby be guided to the allocated parking space.

According to one example electric vehicles with single phase on-board power converters may be allocated to electric chargers which have capacity on that particular phase. The optimisation system 1 may in this case allocate a group of parking spaces, and hence a group of electric chargers where the driver can choose freely within the group. Where there are multiple groups of electric chargers with a separate fuse per group, the electric vehicles can be allocated to a group of electric chargers that still has capacity.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of optimising parking space allocation in a parking lot provided with a plurality of parking spaces and a plurality of electric vehicle chargers associated with a respective parking space, the electric vehicle chargers being connected to an electric grid, wherein the method comprises:
obtaining (S1) a parking start time request and a parking end time request of an electric vehicle (19) to be parked in the parking lot, the time between the parking start time request and the parking end time request being a parking time of the electric vehicle (19),
forecasting (S2) the use and availability of the parking spaces during the parking time,
forecasting (S3) the use of power and energy in the electric grid during the parking time, and
allocating a parking space of the plurality of parking spaces to the electric vehicle (19) by performing an optimisation (S4) based on the parking start time request, the parking end time request, the forecasted use and availability of the parking spaces, and on the forecasted use of power and energy in the electric grid.

2. The method as claimed in claim 1, comprising obtaining electric charging information, wherein the optimisation is further based on the electric charging information.

3. The method as claimed in claim 2, wherein the electric charging information includes a requested final state of charging of the electric vehicle (19).

4. The method as claimed in any of the preceding claims, comprising obtaining electric vehicle characteristics, wherein the optimisation is further based on the electric vehicle characteristics.

5. The method as claimed in claim 4, wherein the electric vehicle characteristics includes at least one of: electric vehicle size, battery type and battery specific charging instructions.

6. The method as claimed in any of the preceding claims, comprising sending a location of the allocated parking space to a remote device.

7. The method as claimed in claim 6, wherein the remote device is a handheld device or a communications device of the electric vehicle.

8. The method as claimed in any of the preceding claims, comprising obtaining a driver profile of the driver of the electric vehicle, wherein the optimisation is further based on the driver profile.

9. The method as claimed in claim 8, wherein the driver profile includes statistical data about previous parking request fulfilments, which provides a measure of a probability that an optimisation target during the parking time will be achieved, wherein the optimisation involves allocating power infrastructure to the electric vehicle charger associated with the allocated parking space based on the statistical data.

10. The method as claimed in claim 9, wherein the allocating of power infrastructure involves selecting power provision only from the electric grid in case the probability that the optimisation target will be achieved is below a threshold level or from the electric grid and from a local renewable energy source otherwise.

11. The method as claimed in any of the preceding claims, wherein the forecasting of the use and availability of the parking spaces takes into account at least one of: maintenance of parking spaces and/or electric vehicle chargers, and expected output of the electric vehicle chargers in a predetermined time frame.

12. The method as claimed in any of the preceding claims, comprising obtaining a preferred parking space request, wherein the optimisation is further based on the preferred parking space request.

13. The method as claimed in claim 12, wherein the preferred parking space request includes at least one of a request of an indoor or outdoor parking space, and accessibility requirements of a driver of the electric vehicle.

14. A computer program comprising computer code which when executed by processing circuitry (3) of an optimisation system (1) causes the optimisation system (1) to perform the method as claimed in any of claims 1-13.

15. An optimisation system (1) for parking space allocation in a parking lot provided with a plurality of parking spaces and a plurality of electric vehicle chargers, wherein the optimisation system (1) comprises:
processing circuitry (3), and
a storage medium (5) comprising computer code which when executed by the processing circuitry (3) causes the optimisation system (1) to perform the method as claimed in any of claims 1-13.
